(19) Europäisches Patentamt
European Patent Office
Office européen des brevets

(11) **EP 2 030 991 A1**

(12) **EUROPEAN PATENT APPLICATION**

(43) Date of publication:
**04.03.2009 Bulletin 2009/10**

(21) Application number: **07115411.6**

(22) Date of filing: **31.08.2007**

(51) Int Cl.:
***C08F 4/68*** *(2006.01)* ***C08F 4/685*** *(2006.01)*
***C08F 210/16*** *(2006.01)*

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Borealis Technology Oy**
**06101 Porvoo (FI)**

(72) Inventors:
- **Garoff, Thomas**
  **00840, Helsinki (FI)**
- **Waldvogel, Päivi**
  **06450, Porvoo (FI)**
- **Kallio, Kalle**
  **06400, Porvoo (FI)**
- **Gustafsson, Bill**
  **444 41, Stenungsund (SE)**

(74) Representative: **Campbell, Neil Boyd et al**
**Frank B. Dehn & Co.**
**St Bride's House**
**10 Salisbury Square**
**London**
**EC4Y 8JD (GB)**

# (54) Solid vanadium-containing Ziegler-Natta catalyst system

(57) Solid Ziegler-Natta catalyst system for the (co) polymerization of ethylene, said catalyst system comprising
1) a solid procatalyst formed by contacting at least:
a) a Mg-alcoholate complex of the formula (I):
$Mg(OR_1)_{2-n}(R_1)_nX_m$, wherein each $R_1$ independently represents a $C_1$-$C_{20}$ hydrocarbyl group; each X is independently a halogen; $0 \leq n < 2$ and may or may not be an integer; $m < 2$ and may or may not be an integer; the sum of (2-n), n and m is 2
b) an aluminium compound of the formula (II)
$Al(R_1)_mX_{3-m}$, wherein each $R_1$ independently represents an alkyl of up to 6 carbon atoms; each X is independently a halogen; $0 \leq m < 3$ and m and may or may not be an integer
c) a vanadium compound and optionally a titanium compound in portions such as to provide a molar ratio of V:Ti from 100:0 to 5:95 and
d) optionally one or more organic ligand compound(s) which is/are selected from organic compounds comprising a cyclopentadienyl anion backbone,
in order to yield the solid procatalyst and
2) one or more organometallic cocatalyst(s) of the formula (III)

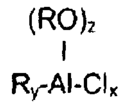

wherein each R is independently a $C_1$-$C_{20}$-alkyl group, $0 \leq x \leq 2$; $1 \leq y \leq 3$;
$0 \leq z \leq 2$ and $x + y + z = 3$, x, y and z may or may not be an integer.
and its use for polymerisation of polyethylene and any co- or terpolymers thereof.

EP 2 030 991 A1

## Description

The present invention relates to improved solid vanadium-containing Ziegler-Natta catalyst systems, as well as to the use of these catalysts for ethylene (co)polymerization.

## Background art

It is known that catalyst systems of the Ziegler-Natta type consist of a catalyst comprising at least one compound of a transition metal, such as titanium or vanadium, and of a cocatalyst comprising at least one organometallic compound of a metal such as aluminum. It is known furthermore that the properties of these catalysts can be greatly affected when the transition metal compound is employed with a support consisting of a solid inorganic compound, such as $MgCl_2$. In a process for preparing a supported catalyst the properties of the support and the process for preparing the catalyst, which generally comprises fixing the transition metal compound on said support, are of a very great importance for the catalyst characteristic. These characteristics are of great importance for the performance of the catalyst in a reaction of homopolymerization or copolymerization of olefins.

Macromol. Rapid Commun. 17, 253-260 (1996) discloses that vanadium-based Ziegler-Natta catalysts are well known for their lower productivity, but nevertheless they yield copolymers with more homogenous distribution of comonomers along the polymer chain. Furthermore they are well-known for their relatively high initial activity which then quickly decreases. This feature being responsible for their inferior productivity available from these catalysts and is a hindering factor for their commercial utilization. Decrease of the relatively high initial activity of both homogenous and heterogenous vanadium-based catalysts is attributed to very quick deactivation of active sites.

To stabilize vanadium active sites the addition of halocarbon compounds was found to be helpful.

US 4,508,842 discloses vanadium-containing catalysts capable of producing ethylene polymers having a broad molecular weight distribution. Said catalysts comprise:

(A) a solid catalyst component consisting essentially of

(1) an inorganic carrier, as support for
(2) the reaction product of (a) a vanadium trihalide and (b) an electron donor, and
(3) a boron halide or alkylaluminium modifier,

(B) an alkylaluminium cocatalyst, and
(C) a halohydrocarbon polymerization promoter.

Japanese Public Disclosure No. 62-25112 discloses vanadium-containing catalyst compositions useful in the preparation of ethylene polymers having a narrow molecular weight distribution. Such composition consists of:

(1) a solid catalyst component obtained by precipitating vanadium trihalide from an ether solution onto a silica and/or alumina carrier and then treating the product with an alkylaluminum,
(2) an alkylaluminum
(3) an alkyl halide, and
(4) an alkoxy compound of silicon.

According to EP 0 435 345 ethylene polymers having a broad molecular weight distribution can be produced at enhanced levels of catalytic activity and polymer productivity employing a vanadium-based catalyst system comprising:

(A) a solid catalyst component consisting essentially of

(1) a solid, particulate, porous inorganic carrier, as support for
(2) the reaction product of (a) a vanadium trihalide and (b) an electron donor, and
(3) a boron halide or alkylaluminium modifier,

(B) an alkylaluminium cocatalyst, and
(C) a halohydrocarbon polymerization promoter,
wherein catalyst component (A) has been treated with a polysiloxane oil activity regulator.

It is also known to use combinations of vanadium with other transition metals such as titanium, zirconium and hafnium in the preparation of ethylene polymers and copolymers with specific characteristics. In particular, the titanium-vanadium combination is often used in the preparation of ethylene copolymers with homogeneous comonomer distribution within the molecule, and having good mechanical characteristics and improved workability, especially when operating with processes using a polymerization temperature exceeding about 150°C and hence requiring catalysts with a reduced number of beta-elimination reactions. These catalyst components are generally prepared by contact, under reaction conditions, between a titanium compound (generally titanium tetrachloride), a vanadium compound and an alkylaluminiumchloride, as described for example in EP 0 057 050. The main drawback of these catalyst components is their relatively low activity in polymerization, this requiring expensive purification of the polymer to remove the catalyst residues.
To stabilize such catalysts it is known to add certain halo-organic compounds, which results in productivity increases in ethylene homo- and copolymerization processes when associated with vanadium based catalysts.

EP 0 969 021 A describes a catalyst system for the polymerization of olefins, which comprises a mixture of (i) an aluminum alkyl compound and a dialkyl magnesium compound; (ii) an alkyl halide; (iii) a transition metal halide; (iv) a vanadium compound; and (v) a dialkyl aluminum alkoxide.
The catalyst is prepared by mixing the components (i) bis (iv), and then adding component (v). Each of the components used are all liquids.
Again an alkyl halide is used as promoter.

US 6,214,759 describes a method for producing a TiN supported catalyst useful in polymerization of ethylene and copolymerization of ethylene and alpha-olefine. This method includes a treatment, by a titanium compound and a vanadium compound, of a magnesium-containing carrier, which is obtained by reaction of an organomagnesium compound of the structure of $MgPh_2.nMgCl_2.mR_2O$ (n=0.37-0.7; m≥1; $R_2$=ether; Ph=phenyl) with an organic chloride compound.
In the process of treating the carrier with a vanadium compound, or with a mixture of vanadium and titanium, the activity of the catalyst is prevented from declining, for the vanadium compound is more stable when diluted in an organic chloride.
The organic chloride used for this purpose, i.e. inhibiting the inactivation of the active substance of vanadium, can be represented by a general formula $CR_nCl_{(4-n)}$; wherein n is an integer of from 0 to 3 and R is an alkyl radical having from 1 to 12 carbons.

From the literature it looks that common vanadium-containing catalyst compositions comprise a vanadium compound and optionally a titanium compound, support material (like $MgCl_2$ or silica) an Al-alkyl cocatalyst and as an essential feature a promoter (like halogenated hydrocarbons) in order to increase the stability of these catalyst compositions.

So summing up, the disadvantages of vanadium-containing catalyst systems disclosed by the state of the art are the following:

a) Need of a promoter, which usually is a halogenated hydrocarbon, to increase stability. Halogenated hydrocarbons are critical compounds for the environment and are further very tricky when used together with aluminum alkyls, which are usually used as cocatalysts.
b) Without the use of a promoter, these catalyst systems have a very poor stability
c) Hydrogen is deactivating them
d) and in general catalyst activity is rather low; low activity causes problems with high catalyst residues, causing for example yellow polymers.

Accordingly, although much development work has been done in the field of Ziegler-Natta catalysts, there remains a continuing search for alternative or improved solid ZN catalyst systems with desirable properties, such as high activity, also when hydrogen is used during polymerization, no need of promoter, high stability, e.t.c..

## Object of the invention

It is therefore an object of the present invention to provide improved solid vanadium-containing Ziegler-Natta catalysts systems, which have improved properties compared to known Ziegler-Natta catalysts systems.

## Description of invention

It was now surprisingly found that the benefits of titanium and vanadium can be combined into the same catalyst particles without the need of any promoter a) by using the special $MgCl_2$-carrier consisting of $MgCl_2$/Et-Al-$(O-R)_2$ as support as described in WO2004/055068 or b) by using the special emulsion/solidification method for preparing the solid procatalyst as described in WO 03/106510.
With these improved solid Ziegler-Natta catalyst systems it is now possible to tailor catalytic polymerization behavior just by fixing ratios of titanium and vanadium.

Definitions

The term "procatalyst" refers to the solid catalyst component.

The terms "catalyst", "Ziegler-Natta catalyst system" or "polymerization catalyst" refer to the active catalyst, which has been obtained by activating the solid catalyst component with the cocatalyst.

Summary of the invention

The object was achieved by an improved solid Ziegler-Natta catalyst system for the (co)polymerization of ethylene, said catalyst system comprising

1) a solid procatalyst formed by contacting at least:

a) a Mg-alcoholate complex of the formula (I):
$Mg(OR_1)_{2-n}(R_1)_nX_m$, wherein each $R_1$ independently represents a $C_1$-$C_{20}$ hydrocarbyl group; each X is independently a halogen; $0 \leq n < 2$ and may or may not be an integer; $m < 2$ and may or may not be an integer; the sum of (2-n), n and m is 2
b) an aluminium compound of the formula (II)
$Al(R_1)_mX_{3-m}$, wherein each $R_1$ independently represents an alkyl of up to 6 carbon atoms; each X is independently a halogen; $0 \leq m < 3$ and m and may or may not be an integer
c) a vanadium compound and optionally a titanium compound in portions such as to provide a molar ratio of V: Ti from 100:0 to 5:95 and
d) optionally one or more organic ligand compound(s) which is/are selected from organic compounds comprising a cyclopentadienyl anion backbone,
in order to yield the solid procatalyst and

2) one or more organometallic cocatalyst(s) of the formula (III)

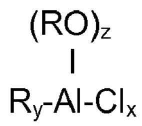

wherein each R is independently a $C_1$-$C_{20}$-alkyl group, $0 \leq x \leq 2$; $1 \leq y \leq 3$; $0 \leq z \leq 2$ and $x + y + z = 3$, x, y and z may or may not be an integer.

Further the present invention provides a solid catalyst having improved properties, especially for producing copolymers, in particular ethylene copolymers with higher α-olefins, such as $C_3$ - $C_{10}$ α-olefins.

Another aspect of the invention relates to an improved solid ZN-catalyst which can control polymer's molecular weight distribution and can maintain sufficient activity during polymerization.

With this improved solid ZN-catalyst it is now possible to produce polymers where the titanium centre makes lower molecular weight polymer homopolymer (because of higher hydrogen sensitivity and poor comonomer response) and vanadium is taking care of high molecular weight polymer having high comonomer content (vanadium site can make high molecular weight with very high comonomer response).

Further, the invention provides a catalyst, by which it is possible to produce copolymers of ethylene, having an improved comonomer distribution due to an improved sensitivity in respect of comonomers and high activity.

Still another aspect of the invention is to provide a process for producing linear low density polyethylene having a density between 900 and 935 $kg/m^3$, which process comprises:

- introducing a procatalyst according to the present invention as described above into the polymerisation reactor
- introducing a cocatalyst capable of activating the said procatalyst into the polymerisation reactor
- introducing ethylene, alpha-olefin comonomers having 3 to 20 carbon atoms and optionally hydrogen into the polymerisation reactor
- maintaining said polymerisation reactor in such conditions as to produce an ethylene copolymer having a density between 900 and 935 $kg/m^3$, and
- recovering said ethylene copolymer

Detailed description of the invention

The vanadium-containing catalyst system for ethylene (co)polymerization and a process for (co)polymerizing ethylene using the vanadium-containing catalyst system will be described in detail hereinafter.

As stated above, solid procatalysts of the invention are formed by contacting at least a) a Mg-alcoholate complex of the formula (I), b) an aluminium compound of the formula (II), c) a vanadium compound and optionally a titanium compound and d) optionally one or more ligand compound(s).

For forming the solid procatalyst of the invention, there are two possible ways of contacting components a), b), c) and optionally d):

Method 1) by preparing the special $MgCl_2$-carrier consisting of $MgCl_2$/Et-Al-(O-R)$_2$ as support as described in WO2004/055068 or

Method 2) by using the special emulsion/solidification method for preparing the catalyst as described in WO 03/106510.

Method 1:

According to Method 1 the solid procatalyst is prepared by contacting

[A] a solid magnesium aluminum complex containing magnesium, halogen and aluminum

[B] with a vanadium compound and optionally a titanium compound in portions such as to provide a molar ratio of V:Ti from 100:0 to 5:95 and

[C] optionally with one or more organic ligand compound(s) which is/are selected from organic compounds comprising a cyclopentadienyl anion backbone

First the solid magnesium aluminum complex (= catalyst support) containing magnesium, halogen and aluminum is described below:

Said complex is obtained by

(a1) adding a solution of a magnesium compound of the formula (I):

$Mg(OR_1)_{2-n}(R_1)_nX_m$, wherein each $R_1$ independently represents a $C_1$-$C_{20}$ hydrocarbyl group; each X is independently a halogen; $0 \leq n < 2$ and may or may not be an integer; $m < 2$ and may or may not be an integer; the sum of (2-n), n and m is 2;

to a solution of a compound of formula (II): $Al(R_1)_mX_{3-m}$, wherein each $R_1$ independently represents an alkyl of up to 6 carbon atoms; X is independently a halogen; $0 \leq m < 3$ and m and may or may not be an integer

(a2) separating the solidified reaction product from the reaction mixture and washing the product with a wash solution until a molar ratio of aluminum to magnesium has a value of at least 0.3

Such complexes are known, for example from WO 2004/055068. Their preparation is done as described in WO 2004/055068.

The patent referred to in this specification is incorporated by reference herein.

Accordingly, the catalyst support prepared according to Method 1 comprises a reaction product formed at least from:

1) Compound (1): A magnesium hydrocarbyloxy compound of a general formula (I):

$$Mg(OR_1)_{2-n}(R_1)_nX_m,$$

wherein each $R_1$ is independently a $C_{1-20}$ hydrocarbyl group, e.g. a $C_{2-15}$ group, preferably a $C_{3-10}$ group, such as a $C_{4-10}$ group, suitably a $C_{4-10}$ group e.g. an alkyl, cycloalkyl, alkylcycloalkyl, cycloalkylalkyl, aryl, arylalkyl, or alkylaryl, wherein "alkyl" used as alone or as part of another option can be linear or branched and "aryl" is preferably of 5-12 carbon ring atoms, suitably phenyl or naphthyl; e.g. each $R_1$ is independently an ethyl, propyl, butyl, pentyl, hexyl, heptyl, octyl; each X is independently a halogen, preferably chlorine; $0 \leq n < 2$ and n may or may not be an integer; $m < 2$ and may or may not be an integer; and the sum of (2-n), n and m is 2.

In a preferred embodiment of the invention, a magnesium hydrocarbyloxy compound of formula $Mg(OR_1)_{2-n}(R_1)_nX_m$ (I), wherein each $R_1$ and X are independently as defined above; m is 0 and $0 \leq n < 2$, is used, which may be commercially available or, preferably, is a reaction mixture of a magnesium alkyl compound of formula $Mg(R_1)_2$ (III),

wherein each $R_1$ independently is as defined above, with an alcohol $R_1OH$, wherein $R_1$ is as defined above; and

2) Compound (2): A halogen-containing compound of formula (II):

$$Al(R_1)_mX_{3-m},$$

wherein each $R_1$ independently represents an alkyl of up to 6 carbon atoms, preferably up to 4 carbon atoms; and each X is independently a halogen, preferably a chlorine; $0 \leq m < 3$ and m may or may not be an integer; e.g. dialkyl aluminium chlorides, such as dimethyl aluminium chloride, diethyl aluminium chloride, diisobutyl aluminium chloride, or alkyl aluminium dichlorides, such as ethyl aluminium dichloride (EADC) or methyl aluminium dichloride;

Optionally, the present support material comprises further catalytically active compounds, e.g. those useful in a ZN catalyst, such as one or more (internal) electron donors, modifiers, additional co-activators and the like to further modify the activity and/or selectivity of the catalysts, as is known in the art, e.g. those known in the art for (co)polymerising ethylene and higher olefins, including organic compounds containing oxygen, nitrogen, sulphur and/or phosphorus, such as organic acids, organic acid anhydrides, organic acid esters, alcohols, ethers, aldehydes, ketones, amines, amine oxides, amides, thiols, various phosphorus acid esters and amides, and the like, added as such or formed in situ, and such compound(s) may be added into one of the solutions of (1) and (2) before the combination of the solutions, or into the reaction media of compounds (1) and (2).

Preferably, the support consists of the reaction product of compound (1), optionally prepared from compound (IV) and $R_1OH$ as defined above, and of compound (2).

Alternatively, said at least one (internal) electron donor, modifier or further compound(s) can be added after the formation of the support product, e.g. when treating the obtained support with the transition metal compound.

A solution of the compound(s) (1) is added to the solution of compound(s) (2) to cause the solidification (precipitation) of the solid reaction product. A slowly addition under mixing is preferred. By slowly addition it is meant herein that the solution (1) is added gradually, e.g. drop wise or other similar means, to cause a uniform solidification reaction as known in the art.

A solution (1) containing a magnesium hydrocarbyloxy compound of formula $Mg(OR_1)_{2-n}(R_1)_nX_m$ (I), wherein $R_1$ and X are as defined above; m is 0 and $0 \leq n < 2$, is prepared first:

by contacting, in a hydrocarbon solvent (e.g. heptane), a compound of formula $Mg(R_1)_2$ (IV), wherein $R_1$ is as defined above under formula (I), e.g. each $R_1$ is independently methyl, ethyl, propyl, butyl, pentyl, hexyl, heptyl or octyl, e.g. di(n-butyl) magnesium, n-butyl sec-butyl magnesium, butyl ethyl magnesium or butyl octyl magnesium, preferably butyl octyl magnesium (BOMAG);
with an alcohol of formula $R_1OH$, wherein $R_1$ is as defined above under formula (I), suitably a cycloalkyl, cycloalkylalkyl, aryl, alkylaryl, arylalkyl or alkyl, each containing from 2 to 15, preferably from 3 to 10 carbon atoms. Preferably $R_1$ is a $C_{3-15}$ cycloalkyl or branched or unbranched $C_{3-15}$ alkyl, preferably a $C_{4-10}$ cycloalkyl or a branched or unbranched $C_{4-10}$ alkyl, such as cyclopentanol, 2-methyl-2-propanol, 2-ethyl-1-butanol, 2-methyl-1-pentanol, 2-ethyl-pentanol, 2-ethyl-1-hexanol, n-heptanol, n-octanol and decanol, preferably 2-ethyl-1-hexanol. The alcohols which are usable to transform the magnesium hydrocarbyl to a magnesium hydrocarbyloxy complex soluble in a hydrocarbon solvent, are known in the art or can be readily determined by a skilled person. Said contact is effected in a temperature between 0 and 100 °C, preferably at 10 to 40 °C, e.g. at 20 to 30 °C. The reaction can be completed by heating the system at 50 to 100 °C for 10 to 100 min. Preferably the alcohol is added to the Mg solution. The molar ratio of Mg dihydrocarbyl to $R_1OH$ ($Mg:R_1OH$) is preferably from 1:1 to 1:4, more preferably 1:1 to 1:3.5, e.g. 1:1.5 to 1:3.5, especially 1:1.8 to 1:3.1.

The solution (2) of the halogen-containing compound is prepared by dissolving in a hydrocarbon solvent as defined above (e.g. toluene) a compound of formula

$$Al(R_1)_mX_{3-m} \qquad (II),$$

wherein each $R_1$ is independently as defined above, preferably an alkyl of up to 6, such as up to 4, carbon atoms; and each X is independently a halogen, such as chlorine; and x may of may not be an integer $0 \leq m < 3$; e.g. dimethyl aluminium chloride, diethyl aluminium chloride, diisobutyl aluminium chloride, ethyl aluminium dichloride and methyl aluminium dichloride, preferably ethyl aluminium dichloride (EADC). Such solutions may also be commercially available, whereby they may be further diluted, if desired, with a solvent as defined above.

The prepared reaction mixture (1), i.e. Mg-hydrocarbyloxy-containing solution (1), is then added slowly to the

obtained Al solution (2).

It has been found that in order to achieve beneficial properties of the support material, the obtained solid reaction product should be recovered from the reaction mixture of solution (1) and (2) before the use as a support.
The recovery step can be effected in various ways including the separation of the solid reaction product from the liquid reaction medium, e.g. by filtration, decantation or suction, and washing the solid product with a wash solution e.g. in a manner known in the art, before it is used as a support material.

It is evident for a skilled person that the washing efficiency can be varied within the scope of the invention depending on the desired washing effect and can be controlled e.g. by the number of the washing steps, the temperature, the solvent(s) used for washing, the amount of the wash solution and the washing time. The wash temperature can be e.g. 0 to 100 °C, suitably 20 to 100 °C, e.g. 40 to 80 °C, such as 55 - 70 °C. Thus the duration of a washing (e.g. the mixing time of the slurry in a wash solution) depends on the desired effect and can be chosen accordingly. The washing effect depends on the separation efficiency of the solid material from the solution.

Solutions of the Starting Compounds

The term "solution" is understood herein broadly to include solutions prepared from (a) one or more of the support forming compounds in liquid form (liquid at the room temperature or a melt prepared at a higher temperature), and/or (b) from an organic solvent(s).
The solutions are suitably formed using an organic solvent that dissolves the compounds. Preferred solvents include inert hydrocarbons, e.g. linear or branched aliphatic, alicyclic or aromatic $C_{5-20}$ hydrocarbons, preferably $C_{6-12}$ hydrocarbons, wherein the ring systems may contain hydrocarbon, e.g. $C_{1-6}$ alkyl substituents, such as cyclohexane, hexane, heptane, octane or toluene, or any mixtures thereof. E.g. linear or branched alkanes, e.g. hexane, heptane or octane, may be used.

Wash Solution

As the wash solution, e.g. any organic solvent or mixtures thereof known in the art can be used. Preferable solvents include hydrocarbons as defined above, e.g. pentane, hexane or heptane, particularly heptane.

Further treatment steps of the solid reaction product may also be possible after the combination of solutions (1) and (2) (i.e. after the precipitation reaction) before or during the recovery step of the invention. Such treatment includes e.g. a heating step of the reaction mixture after the solidification at an elevated temperature, e.g. up to 100 °C, such as 40 to 80 °C, suitably 50 to 75 °C, for a suitable period of time, such as from 5 minutes to 24 hours, e.g. 10 to 720 minutes, such as 20 to 360 minutes, before the recovery step.

In a preferable embodiment, the molar ratio of aluminum to magnesium in the catalyst support material of the invention is at least 0.3 (≥ 0.3). Preferably the molar ratio of aluminum to magnesium is at least 0.4 (≥ 0.4), or preferably at least 0.5 (≥ 0.5), or at least of 0.6 (≥ 0.6). Said ratios result in a catalyst with very good morphology and reduced amount of fines content of the produced polymer product. In a further embodiment of the invention said molar ratio may be even at least 0.7 (≥ 0.7) or 0.80 (≥ 0.80), such as 0.85 (≥ 0.85), depending on the properties desired for the catalyst. In principle, the upper limit of said ratio range is not limited, but may be e.g. 1.1. In one preferred embodiment said upper limit of said molar ratio is 0.99. The above-said molar ratio can be determined in a known manner, e.g. using flame atomic absorption method with e.g. a nitrous oxide/acetylene flame.

The molar ratio of aluminum to magnesium in the support material is adjusted to a desired range by means of the recovery step of the invention, i.e. by separating the solids from the liquid reaction medium and by washing the solids as described above. Particularly, the obtained solid reaction product is washed with a wash solution, and the washing procedure can be repeated, if needed, until the desired ratio is obtained. The ratio can be monitored between the washings, if needed, e.g. by analysing the support samples in a conventional manner the relevant contents of the reaction product or the reaction medium, e.g. the mol-% of Mg and the mol-% of Al in the formed carrier material.

After the recovery step of the invention, the solid reaction product can be used as a support material for further catalytically active compounds, such as vanadium and optionally titanium to form a final polymerisation catalyst component, such as the solid ZN-procatalyst of the invention.

Accordingly, in the method for preparing the solid Ziegler-Natta procatalyst of the invention, the catalyst support, prepared according to the present Method 1, is suspended in an organic solvent and treated at least with one transition metal compound, i.e. a vanadium compound and optionally a titanium compound. The treatment step is preferably effected in a manner known in the art.

The vanadium compound employed for the preparation of the procatalyst is soluble in the liquid hydrocarbon and is, in general, a compound in which the vanadium has its maximum valency, that is to say valency 4, or else those in which the vanadyl group VO has its maximium valency, that is to say valency 3. The vanadium compound employed may be a compound which has either of the two general formulae $V(OR)_{4-m}X_m$ or $VO(OR)_{3-n}X_n$ in which formulae R

denotes an alkyl group containing from 1 to 12 carbon atoms, X a halogen atom, such as bromine or chlorine, m an integral or fractional number ranging from 0 to 4 and n an integral of fractional number ranging from 0 to 3. Advantageously, one or more compounds can be employed, chosen from vanadium tetrachloride, vanadyl trichloride, vanadyl tri-n-propoxide, vanadyl triisopropoxide and vanadium tetra-n-propoxid.
Preferably vanadium tetrachloride is used.

The titanium compound employed for the preparation of the procatalyst is also soluble in the liquid hydrocarbon and is, in general, a compound in which the titanium has its maximum valency, that is to say valency 4. The titanium compound employed may be a compound of the general formula $Ti(OR)_{4-p}X_p$ in which formula R denotes an alkyl group containing from 1 to 12 carbon atoms, X a halogen atom, such as bromine or chlorine, and p an integral or fractional number ranging from 0 to 4. Among these compounds, titanium tetrachloride or titanium tetraisopropoxide can be employed
Preferably titanium tetrachloride is used.

The quantity of vanadium and titanium compound which are employed to prepare the procatalyst is in particular such that the molar ratio of V:Ti is from 100:0 to 5:95, preferably to 10:90, more preferably to 15:85 and most preferably to 20:80.
It is also possible to choose more narrow ranges, as for example that the molar ratio of V:Ti is from 60:40 to 40:60.
The molar ratio to be chosen depends on the desired properties of the polymer produced.

Generally, in the final solid procatalyst particles, the molar ratio of Mg:(V/Ti) can be e.g. between 10:1 to 1:10, preferably less than 6:1, such as between less than 6:1 and 1:1.
The molar ratio of (V/Ti):Al can be e.g. between 10:1 to 1:2, e.g. 5:1 to 1:1. The ratios can be determined in a manner known in the art.

Optionally the procatalyst can also contain one or more organic ligand compound(s) which is/are selected from organic compounds comprising a cyclopentadienyl anion backbone.
The ligand compound d) may be added at any stage in the preparation of the catalyst before the final recovery of the catalyst.

The organic ligand d) of the procatalyst of the invention, which may be added optionally, originates from a compound having an organic ligand anion. The cationic part is preferably a metal, i.e. the compounds preferably are metal salts of organic anions. The metals preferably are metals of Group 1 or 2, preferably Mg and Li metals, i.e. the compounds to be used in ligand modifying of the catalysts are preferably Li or Mg salts of organic ligand anions.

The organic ligand anion comprises a cyclopentadienyl hydrocarbon backbone, which may contain heteroatoms such as N, P, O, S etc.

Said cyclopentadienyl hydrocarbon backbone can be a part of a fused hydrocarbon ring system. As examples of that type of ring systems can mentioned e.g. pentalenyl, indenyl, atsulenyl, indasenyl, asenaphtylenyl or fluorenyl compounds. All hydrocarbons backbones can be in substituted or unsubstituted form.

For example, the organic ligand anion may be a substituted or unsubstituted cyclopentadienyl, a substituted or unsubstituted indenyl or a substituted or unsubstituted fluorenyl compound.

The optional one or more substituent(s), are independently selected preferably from halogen, hydrocarbyl, e.g. $C_1$-$C_{20}$-alkyl, $C_2$-$C_{20}$-alkenyl, $C_2$-$C_{20}$-alkynyl, $C_3$-$C_{12}$-cycloalkyl, $C_6$-$C_{20}$-aryl or $C_7$-$C_{20}$-arylalkyl, $C_3$-$C_{12}$-cycloalkyl which contains 1, 2, 3 or 4 heteroatom(s) in the ring moiety, $C_6$-$C_{20}$-heteroaryl, $C_1$-$C_{20}$-haloalkyl, $-SiR''_3$, $-OSiR''_3$, -SR", $-PR''_2$ or $-NR''_2$, each R" is independently a hydrogen or hydrocarbyl, e.g. $C_1$-$C_{20}$-alkyl, $C_2$-$C_{20}$-alkenyl, $C_2$-$C_{20}$-alkynyl, $C_3$-$C_{12}$-cycloalkyl or $C_6$-$C_{20}$-aryl; or e.g. in case of $-NR''_2$, the two substituents R" can form a ring, e.g. five- or six-membered ring, together with the nitrogen atom wherein they are attached to.

Examples of the organic ligand anions comprise cyclopolyenyls or substituted cyclopolyenyls having 5 to 24 carbon atoms such as cyclopentadienyl, methylcyclopentadienyl, ethylcyclopentadienyl, t-butylcyclopentadienyl, hexylcyclopentadienyl, octylcyclopentadienyl, 1,2-dimethylcyclopentadienyl, 1,3-dimethylcyclopentadienyl, 1,2,4-trimethylcyclopentadienyl, 1,2,3,4-tetramethylcyclopentadienyl, pentamethylcyclopentadienyl, indenyl, 4-methyl-1-indenyl, 4,7-dimethylindenyl, 4,5,6,7 -tetrahydroindenyl, fluorenyl or methylfluorenyl, 2,3-dimethyl-dimethyl-t-butyl-siloxycyclopentadienyl.

The final procatalyst, e.g. the ZN procatalyst, thus obtained is combined with further catalyst component(s) conventionally used in the art, such as a cocatalyst (e.g. aluminium alkyl compounds) and optionally (internal) electron donors, additional activators and/or modifiers. Said further catalyst component(s) can be combined with the present procatalyst during the preparation method of the present procatalyst or during the actual polymerisation step by adding the procatalyst of the invention and the further component(s) separately into a reactor.

Method 2:

According to Method 2 the solid procatalyst is prepared by using the special emulsion/solidification method as described in WO 03/106510.

The patent referred to in this specification is incorporated by reference herein.

According to Method 2 the solid procatalyst is formed by contacting at least

a) a Mg-alcoholate complex of the formula (I)
b) an aluminium compound of the formula (II)
c) a vanadium compound and optionally a titanium compound in portions such as to provide a molar ratio of V:Ti from 100:0 to 5:95 and
d) optionally with one or more organic ligand compound(s) which is/are selected from organic compounds comprising a cyclopentadienyl anion backbone;

the method comprising

- Preparing a common solution of a), b) and c) or separate solutions comprising one or more of compounds a), b) and c)
- dispersing said solution(s) in a solvent immiscible therewith and inert in relation to said compounds, to obtain an emulsion in which said solution(s) form(s) the dispersed phase in the form of droplets comprising compounds (a), (b) and (c),
- solidifying the catalyst compounds in the dispersed droplets and
- optionally adding one or more ligand compound(s) d) which is/are selected from organic compounds comprising a cyclopentadienyl anion backbone at any stage of the preparation into the dispersed phase before or after the solidification step.

Optionally, the obtained solidified catalyst compounds particles may be recovered.

The solidified catalyst particles (= procatalyst) can be washed before the final recovery.

In the formation of the procatalyst of the Ziegler-Natta catalyst system of the invention compound d) may be added at any stage of the procatalyst preparation, however, before said optional final recovery step.

The magnesium hydrocarbyloxy compound a) of formula $Mg(OR_1)_{2-n}(R_1)_nX_m$ (I), wherein $R_1$ and X are as defined above; m is 0 and $0 \leq n < 2$, is prepared first, as described for Method 1, by contacting, in a hydrocarbon solvent (e.g. heptane), a compound of formula $Mg(R_1)_2$ (IV) with an alcohol of formula $R_1OH$. The molar ratio of Mg dihydrocarbyl to $R_1OH$ ($Mg:R_1OH$) is preferably from 1:1 to 1:4, more preferably 1:1 to 1:3.5, e.g. 1:1.5 to 1:3.5, especially 1:1.8 to 1:3.1.

The aluminium compound b) of the formula (II) is defined as described above, having the formula $Al(R_1)_mX_{3-m}$, wherein each $R_1$ independently represents an alkyl of up to 6 carbon atoms; X is independently a halogen; $0 \leq m < 3$ and m and may or may not be an integer.

The Vanadium compound and the Titanium compound are also defined as described above for Method 1. Preferably $VCl_4$ and $TiCl_4$ are used.

The organic ligand d) of the procatalyst of the invention, which may be added optionally, is also defined as described above for Method 1.

In the method for forming the catalyst component, the compounds a), b), c) and d), may be combined into one solution which is dispersed in the immiscible solvent, or, alternatively, at least two separate solutions for each or part of said compounds may be prepared, which are then dispersed successively to the immiscible solvent.

The ligand compound d) may be added at any stage in the preparation of the catalyst before the final recovery of the catalyst. The ligand compound may be mixed together with the solutions of compounds a), b) or c) and then dispersed in the immiscible solvent, or as stated above, it can be added during or after the solidification step, e.g. during the washing step before the final recovery.

The term "a solvent immiscible therewith and inert in relation to said compounds" means herein that said solvent forming the continuous phase is chemically inert. Preferably, the solvent of said continuous phase does not contain dissolved therein any significant amounts of catalyst forming compounds a), b), c) or d). Thus, the solid particles of the procatalyst are formed in the droplets from the compounds which originate from the dispersed phase (i.e. are provided to the emulsion in a solution dispersed into the continuous phase).

The term "emulsion" used herein covers both bi- and multiphasic systems.

As stated above, before the final recovery step the solid catalyst particles may be washed. The washed solid particles can be isolated and dried in a manner known in the art to obtain said procatalyst as dried particulate solids. Another alternative is to slurry the solid procatalyst particles after washing into an oily liquid to get a catalyst-oil-slurry, which can be used as such in polymerisation. By this method the drying step can be avoided. Drying step can in some cases have undesired effects on the catalyst morphology. The oily liquid comprises oil, petroleum or hydrocarbons or mixtures thereof, preferably hydrocarbon oils, such as white oils, which are mixtures of paraffinic and naphtenic hydrocarbons.

The solution to be dispersed into the immiscible solvent can be any solution prepared from the catalyst component(s) forming compounds, provided that it is in a form of a liquid when dispersed into the continuous phase. Said term "solution" is understood herein broadly to include solutions prepared from (i) one or more catalyst forming compound in liquid form, (ii) from a second inert solvent, and/or (iii) a melt of said compound(s); as described herein below.

In case of a second inert solvent, any suitable solvent which dissolves said compounds may be used, preferably an organic solvent including linear or branched aliphatic, alicyclic and aromatic hydrocarbons, suitably an aliphatic or aromatic hydrocarbon, e.g. pentane, hexane, heptane, toluene, benzene etc, preferably aromatic hydrocarbon, most preferably toluene. A mixture of second solvents may also be used, provided that said mixture dissolves the compounds and is immiscible with the continuous phase at least during the emulsion formation step.

The solvent used to form the continuous phase is chosen, as stated above, to be inert, and also immiscible with the solution to be dispersed at least at the conditions (e.g. temperature) used during the dispersing step. Said first solvent may also be a mixture of one or more solvents. Furthermore, the solvent is chosen so that the compounds and possible intermediate(s) thereof which form the solidifying catalyst component(s), as well as the solidified procatalyst, are practically insoluble or only poorly soluble to the continuous phase.

In a preferred embodiment said solvent forming the continuous phase is an inert solvent including halogenated organic solvents, preferably fluorinated organic solvents and particularly semi, highly or perfluorinated organic solvents and functionalised derivatives thereof, which means that said solvents may contain other functional groups and/or further halogens such as chlorine, bromine and/or iodine.

Examples of the above-mentioned solvents are semi, highly or perfluorinated hydrocarbons, such as alkanes, alkenes and cycloalkanes, ethers, e.g. perfluorinated ethers and amines, particularly tertiary amines, and functionalised derivatives thereof. Preferred are semi, highly or perfluorinated, particularly perfluorinated hydrocarbons, e.g. perfluorohydrocarbons of e.g. C3-C30, such as C4-C10. Specific examples of suitable perfluoroalkanes and -cycloalkanes include perfluorohexane, -heptane, -octane and- (methylcyclohexane). Semi fluorinated hydrocarbons relates particularly to semifluorinated n-alkanes, such as perfluoroalkyl-alkane.

"Semi fluorinated" hydrocarbons also include such hydrocarbons wherein blocks of -C-F and -C-H alternate. "Highly fluorinated" means that the majority of the -C-H units are replaced with -C-F units. "Perfluorinated" means that all -C-H units are replaced with -C-F units. See the articles of A. Enders and G. Maas in "Chemie in unserer Zeit", 34. Jahrg. 2000, Nr.6, and of Pierandrea Lo Nostro in "Advances in Colloid and Interface Science, 56 (1995) 245-287, Elsevier Science

The emulsion can be formed by any means known in the art: by mixing, such as by stirring said solution vigorously to said solvent forming the continuous phase or by means of mixing mills, or by means of ultra sonic wave. A further possibility is to use a so called phase change method for preparing the emulsion by first forming a homogeneous system which is then transferred by changing the temperature of the system to a biphasic system so that droplets will be formed. If needed, part of the catalyst forming compounds may be added after the emulsion system is formed.

The two phase state is maintained during the emulsion formation step and the solidification step, as, for example, by appropriate stirring.

The ratio of catalyst component(s) forming solution and the first solvent immiscible therewith is chosen so that the first solution forms the discontinuous phase (droplets) in the bi- or multiphase system.

Additionally, emulsifying agents/emulsion stabilisers can be used, preferably in a manner known in the art, for facilitating the formation and/or stability of the emulsion. For the said purposes e.g. surfactants, e.g. a class based on hydrocarbons (including polymeric hydrocarbons with a molecular weight e.g. up to 10 000 and optionally interrupted with a heteroatom(s)), preferably halogenated hydrocarbons, such as semi- or highly fluorinated hydrocarbons optionally having a functional group selected e.g. from -OH, -SH, $NH_2$, -COOH, -$COONH_2$, cyclic ethers and/or any reactive derivative of these groups, like alkoxy or carboxylic acid alkyl ester groups, or, preferably semi-, highly- or perfluorinated hydrocarbons having a functionalised terminal, can be used.

Alternatively, an emulsifying and/or emulsion stabilising aid can also be formed by reacting a surfactant precursor bearing at least one functional group with a compound reactive with said functional group and present in the catalyst solution or in the solvent forming the continuous phase. The obtained reaction product acts as the actual emulsifying aid and or stabiliser in the formed emulsion system.

Examples of the surfactant precursors usable for forming said reaction product include e.g. known surfactants which bear at least one functional group selected e.g. from -OH, -SH, $NH_2$, -COOH, -$COONH_2$, cyclic ethers with 3 to 5 ring atoms, and/or any reactive derivative of these groups, like alkoxy or carboxylic acid alkyl ester groups; e.g. semi-, highly or perfluorinated hydrocarbons bearing one or more of said functional groups. Preferably, the surfactant precursor has a terminal functionality as defined above.

These and any further additives, and/or compounds can be added to the system in any stage of the dispersing and/or solidification step, if needed.

In the preparation process of the invention the solution may already contain all the compounds (to be added)

before the dispersing step thereof. Alternatively, e.g. depending on the reactivity of the compounds, the dispersed phase can be formed first from one or more of the compounds and, thereafter, the other compound(s) can be added separately to said dispersed phase. Said other compounds can be added in a form of a solution or already in a form of an emulsion. Portion-wise additions of the dispersed phase are also possible.

In one alternative the solution is prepared according to or analogously to the method as described for example in WO 01 55230 by reacting the magnesium hydrocarbyloxy compound of the formula (I) with the aluminium compound of formula (II) and - for procatalysts conataining V as well as Ti - by adding a titanium compound to form a soluble Mg-Al-Ti complex. This Mg-Al-Ti complex is then first added to the inert solvent and the V-compound is added immediately after addition of the Mg-Al-Ti complex. In an other alternative a solution of Mg -Al complex is formed first, which is added to the inert solvent first, and immediately after that a V/Ti mixture is added to the system. Still in a further alternative a solution of Mg-Al-complex and V/Ti mixture is added all in one step to the inert solvent.

The same method principles can be applied also to the cases, where no Ti-compound is added.

The solidification of the catalyst component(s) in the dispersed droplets can be effected in various ways, e.g. by causing or accelerating the formation of said solid catalyst forming reaction products of the compounds present in the droplets. This can be effected, depending on the used compounds and/or the desired solidification rate, with or without an external stimulus, such as a temperature change of the system.

In a further embodiment, the solidification reactions of the compounds are started after the formation of the emulsion system. Accordingly, a solution of one or more of the starting compounds of a catalyst component(s) is first dispersed into the inert, immiscible solvent, and thereafter, the other(s) of the starting compounds is added to said first dispersed phase, whereafter the solidification reactions starts therein. Again, heating or cooling can be used during and/or after such additions.

Alternatively the solidification may be effected (or accelerated) by removing the solvent from the droplets or in case of a molten liquid catalyst by cooling the system.

The solidification may also be controlled by the reaction time.

Alternatively, if desired, the emulsion system may be subjected to a very rapid temperature change to cause a fast/immediate solidification in the dispersed system.

The appropriate temperature change, i.e. an increase or a decrease in the temperature of an emulsion system, required for the desired solidification rate of the components cannot be limited to any specific range, but naturally depends on the emulsion system, i.a. on the used compounds and the concentrations/ratios thereof and/or on the used solvents, and is chosen accordingly. It is also evident that any techniques may be used to provide sufficient heating or cooling effect to the dispersed system to cause the desired solidification.

In one embodiment the heat treatment is effected by bringing, e.g. dispersing, such as spraying or preferably siphoning, the emulsion system to an inert receiving medium. The temperature of the receiving system can be significantly higher than that of the emulsion to cause an instant solidification of the reaction product in the droplets. The receiving medium can be gaseous or a liquid, preferably a solvent, and suitably the same as used as the continuous phase in the formation of the emulsion.

The solidified procatalyst particles may be subjected to washing step(s).

The droplet shape of the particles may be substantially maintained. The formed particles may have an average size range of 1 to 500 μm, e.g. 5 to 500 μm, advantageously 5 to 200 μm or 10 to 150 μm. Even an average size range of 5 to 60 μm is possible. The size may be chosen depending on the polymerisation the catalyst is used for. Advantageously, the particles are essentially spherical in shape, they have a low porosity and a low surface area.

The quantity of vanadium and titanium compound which are employed to prepare the procatalyst is in particular such that the molar ratio of V:Ti is from 100:0 to 5:95, preferably to 10:90, more preferably to 15:85 and most preferably to 20:80.

Again, in the final solid procatalyst particles, the molar ratio of Mg:(V/Ti) can be e.g. between 10:1 to 1:10, preferably less than 6:1, such as between less than 6:1 and 1:1.

The molar ratio of (V/Ti):Al can be e.g. between 10:1 to 1:2, e.g. 5:1 to 1:1. The ratios can be determined in a manner known in the art.

The final procatalyst, e.g. the ZN procatalyst, thus obtained is combined with further catalyst component(s) conventionally used in the art, such as a cocatalyst (e.g. aluminium alkyl compounds) and optionally (internal) electron donors, modifiers and/or additional activators. Said further catalyst component(s) can be combined with the present procatalyst during the preparation method of the present procatalyst or during the actual polymerisation step by adding the procatalyst of the invention and the further component(s) separately into a reactor.

<u>Cocatalyst</u>

The above described procatalyst, prepared by Method 1 or by Method 2, for the polymerisation of $C_2$-$C_{20}$ olefins is combined with a cocatalyst so that it can be used in a polymerisation process.

The cocatalyst is an organometallic compound of formula (III)

$$\begin{array}{c}(RO)_z\\ |\\ R_y\text{-}Al\text{-}Cl_x\end{array}$$

wherein each R is independently a $C_1$-$C_{20}$-alkyl group, $0 \leq x \leq 2$; $1 \leq y \leq 3$; $0 \leq z \leq 2$ and $x + y + z = 3$, x, y and z may or may not be an integer;

Examples of suitable cocatalysts are:

Aluminium alkyls (x and z = 0; y = 3) like trimethyl aluminum, triethyl aluminum, triisobutylaluminium, tri-n-octyl aluminum and isoprenyl aluminum. Especially triisobutylaluminium is preferred.

Aluminium alkyl halides ($z = 0$; $0 < x \leq 2$; $1 \leq y < 3$) like diethyl aluminium chloride, ethyl aluminium dichloride, dipropyl aluminium chloride, propyl dibutyl aluminium chloride, butyl aluminium dichloride, methyl aluminium dichloride, dimethyl aluminium chloride

Aluminium alkoxy compounds ($0 < z \leq 2$, $x = 0$; $1 \leq y < 3$) like diethyl aluminium ethoxide, diethyl aluminium propoxide, ethyl aluminium diethoxide, dipropyl aluminium ethoxide, di (iso)butyl aluminium ethoxide, (iso)butyl aluminium diethoxide, methyl aluminium propoxide, dimethyl aluminium ethoxide, or any combinations of alkyl and alkoxy groups.

Alternatively, the cocatalyst may be a mixture of compounds selected from the group consisting of tri-$C_1$-$C_{10}$ alkyl aluminum compounds, where one of the components comprises short-chained alkyl groups (1 - 3 carbon atoms) and the other component comprises long-chained alkyl groups (4 - 20 carbon atoms). Examples of suitable aluminum alkyls comprising short-chained alkyl groups are trimethyl aluminum and in particular, triethyl aluminum. Examples of suitable components comprising long-chained alkyl groups are tri-n-octyl aluminum and in particular isoprenyl aluminum. In particular, the cocatalyst is a mixture of isoprenyl aluminum and triethyl aluminum or isoprenyl aluminum and trimethyl aluminum.

In the $C_2$-$C_{20}$ olefin polymerization catalyst system according to the present invention, the molar ratio between the aluminium in said cocatalyst and the vanadium/titanium of said procatalyst is preferably 1:1 - 100:1, more preferably 2:1 - 50:1 and most preferably 3:1 - 20:1.

The procatalyst and the cocatalyst may be contacted with each other prior to their introduction into the polymerisation reactor. However, it is equally well possible to introduce the two catalyst components separately into the reactor.

## Polymerisation process

The procatalyst respectively the Ziegler-Natta catalyst system according to the invention may be used in any conventional ethylene (co)polymerisation process, in a manner known in the art. Such processes include, among others, slurry polymerisation process, fluidised bed gas phase polymerisation process, agitated bed gas phase polymerisation process and solution polymerisation process or combinations of the above mentioned processes.

It is also possible to combine said catalyst system with one or more other ZN and/or non-ZN catalysts.

The present catalyst system is used for the polymerisation of polyethylene and any copolymers thereof.

The olefin to be polymerised using the catalyst system of the invention can be ethylene alone or a mixture with one or more comonomers. Preferable comonomers are $C_3$-$C_{12}$ olefins, preferably $C_4$-$C_{10}$ olefins, such as 1-butene, isobutene, 1-pentene, 1-hexene, 4-methyl-1-pentene, 1-heptene, 1-octene, 1-nonene, 1-decene, as well as diene, such as butadiene, 1,7-octadiene and 1,4-hexadiene, or cyclic olefins, such as norbornene, and any mixtures thereof.

So the catalyst system of the invention can be used for the production of ethylene homo-, co- or terpolymers.

Polymerisation may be effected in one or more, e.g. one, two or three polymerisation reactors, using conventional polymerisation techniques, in particular gas phase, solution phase, slurry or bulk polymerisation. Polymerisation can be a batch or continuous polymerisation process.

For slurry reactors, the reaction temperature will generally be in the range of 40 to 110 °C (e.g. 60 - 110 °C), the reactor pressure will generally be in the range 10 to 80 bar, and the residence time will generally be in the range 0.3 to 5 hours (e.g. 0.5 to 2 hours). For ethylene full scale polymerizing process typical temperatures are between 70 and 105 °C and pressure is usually between 40 and 70 bar. The diluent used will generally be an aliphatic hydrocarbon having a boiling point in the range of -70 °C to +100 °C. In such reactors, polymerisation may, if desired, be effected under supercritical conditions.

For gas phase reactors, the reaction temperature used will generally be in the range 60 to 115 °C (e.g. 70 to 110 °C), the reactor pressure will generally be in the range 10 to 30 bar, and the residence time will generally be 1 to 8 hours.

Generally the quantity of catalyst used will depend upon the nature of the catalyst, the reactor types and conditions and the properties desired for the polymer product. The melt flow rate and the density as well as the molecular weight of the resulting ethylene homo-, co- or terpolymers can be controlled independently over wide ranges.

The advantage of using the catalyst system of the invention becomes especially apparent when producing linear low density ethylene polymers, having a density of from about 900 to 935 kg/$m^3$, preferably from 900 to 930 kg/$m^3$.

Summing up, the catalysts system of the present invention has the following advantageous properties compared to catalyst systems known from the state of the art:

a) no promoter is needed at all
b) furthermore there is no need for internal and/or external donors
c) using the catalyst system of the invention makes it possible to tailor catalytic polymerization behavior just by fixing ratios of titanium and vanadium
d) multimodal, preferably bimodal molecular weight distribution can easily be created
e) synergistic effect between vanadium and titanium
f) combined V-Ti catalysts give a significantly increased stability to the catalyst, i.e. deactivation does not occur during polymerization or is at least significantly less than described by the state of the art.
g) very high activity (up to 65 kg/g.cat.h)
h) surprisingly low Al/(V+Ti) ratios are needed for reaching good activity - indication of easy activation of catalyst

With the catalyst system according to the present invention it is possible to yield ethylene co- or terpolymer compositions which preferably comprise a molecular weight of from 100 000 to 1 200 000 g/mol and a comonomer content of from 1 to 16 w-%, depending on the V/Ti molar ratio and the polymerization conditions, especially $H_2$- addition.

**Experimental and Examples**

1. Definitions and Measurement Methods

The polymers were characterized by GPC and DSC and in addition by XS %, density and Comonomer content.

**a) Molecular weights, molecular weight distribution (Mn, Mw, MWD) - GPC**

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

**b) Melting Temperature ($T_m$) and the Crystallization Temperature ($T_{cr}$)**

**Differential Scanning Calorimeter (DSC)**

The Melting Temperature ($T_m$) and the Crystallization Temperature ($T_{cr}$) were measured with Mettler TA820 differential scanning calorimeter (DSC) on 3±0.5 mg samples. Both crystallization and melting curves were obtained during 10°C/min cooling and heating scans between -10 - 200°C. Melting and crystallization temperatures were taken as the peaks of endotherms and exotherms, respectively. The degree of crystallinity was calculated by comparison with heat of fusion of a perfectly crystalline polyethylene, i.e. 290 J/g.

**c) Density**

Density of the polymer was determined according to ISO 1183-1987.

**d) Xylene Solubles (XS) Content**

2.0 g of polymer is dissolved in 250 ml p-xylene at 135 °C under agitation. After 30 minutes, the solution is allowed to cool for 15 minutes at ambient temperature and then allowed to settle for 30 minutes at 25 °C. The solution is filtered with filter paper into two 100 ml flasks.

The solution from the first 100 ml vessel is evaporated in nitrogen flow and the residue is dried under vacuum at 90 °C until constant weight is reached.

$$XS\% = (100 \times m_1 \times v_0) / (m_0 \times v_1)$$

$m_0$ = initial polymer amount (g)

$m_1$ = weight of residue (g)

$v_0$ = initial volume (ml)

$v_1$ volume of analysed sample ml)

**e) Comonomer contents** (hexene and butene) were measured with Fourier transform infrared spectroscopy (FTIR) calibrated with $^{13}C$-NMR

**Preparation of the Mg-alcoholate complex**

The Mg-alcoholate was prepared in a larger batch. About 24 kg of the Mg-alcoholate complex was produced. The Mg-alcoholate complex synthesis was started by adding 16,0 kg (472 g Mg, 19,42 mol Mg) of 20 % heptane solution of $(C_4H_9)_{1,5}Mg(C_8H_{17})_{0,5}$ (BOMAG, 2,95 % Mg) into a multi purpose reactor at room temperature. To this solution 4,921 kg (37,79 mol) of 2-ethyl-hexanol (EHA) was added slowly at room temperature. The Mg/EHA molar ratio in this mixture was 1:1,945. The temperature was held at about room temperature and the reactants were allowed to react with each other for 108 min. 3,757 kg (52,1 mol) of n-pentane was added at room temperature to reduce viscosity and the Mg-alcoholate complex was allowed to stabilise for 120 min at 20 - 30 °C. After this the Mg-alcoholate solution was allowed to temperate back to room temperature. Analyses showed that the Mg-alcoholate complex had a concentration of 2,4 % Mg.

**Preparation of the $MgCl_2$ support material - Method 1**

The reactor used to create the $MgCl_2$ precipitate was a 250 ml glass reactor. To improve the mixing efficiency buffels were fixed on the inner walls of the reactor just above the propeller blades.

25 ml (17,09 g, 0,171 mol) of heptane ($C_7$) was first added to the reactor. Then 38,2 g (7,64 g, 60,2 mmol) of a 20 % pentane solution of EADC was added. Mixing speed was increased to 460 rpm to create good precipitation conditions. 47,0 g (1,128 g Mg, 46,4 mmol Mg) of the Mg-complex solution, as prepared above, was added drop by drop with a syringe during 45 min into the reaction solution at room temperature. The Mg/Al molar ratio in this mixture was about 1: 1,3. After this the temperature was adjusted to 75 °C and the reactants were allowed to react with each other. After reaction, the precipitate was allowed to settle for 30 min and then the liquid was siphoned off and the support washed one time with 40 ml of heptane for 20 min at 60°C. The wash solution was then siphoned off.

**Preparation of the catalysts**

4 catalysts according to the invention - Method 1 - (A, B, C and D), one comparative catalyst without Vanadium (E), one comparative example using $MgCl_2$*3EtOH as a carrier (F) and three catalysts where the catalyst morphology is created through an emulsion process (G, H and I) - Method 2- were prepared in this test series.

For each catalyst (A, B, C, D and E) a new support-heptane slurry was created by adding 20 ml of heptane to the reactor. To this slurry $VCl_4$ and/or $TiCl_4$ was added. The (V+Ti)/Mg molar ratio was 0,5/1.

The temperature was increased to 60°C and the reactants were allowed to react with each other for 30 min. After reaction the liquid was drawn off and the catalyst washed two times with 40 ml portions of heptane at 60°C for 20 min. Finally 35 ml of the wash heptane was siphoned off, and the remaining heptane catalyst slurry was studied in respect of its chemical composition and physical appearance. The compositions of the catalysts were measured in respect of their

Mg, Al, Ti, V and Cl content. (see table 1).

Catalyst F

A $MgCl_2$*3EtOH heptane slurry was prepared. To this slurry triethylaluminium was added and the reactants were allowed to react with each other for 1 h. After reaction the carrier was washed two times with heptane at 20°C for 20 min. After that, VCl4 and TiCl4 were added, creating a worthless very bad-looking green sticky material. Because this product had such a bad morphology no further analyses, nor any polymerizations were done using this material.

Catalyst G:

Into a glass reactor was added 70ml PFC (perfluorocyclohexane) and 0,44ml PFPO (3-perfluoro-octyl)1,2-propenoxide) as a surfactant, stirring speed was 500 - 700rpm. A complex of Mg-alcoholate, ethylaluminiumdichloride and $TiCl_4$ was prepared in a separate vessel and added to the PFC/PFPO first and immediately after that $VCl_4$ was added and a good emulsion was formed. The emulsion was heated up to 85°C and the reactants were allowed to react for ~1h at 85°C. Then the catalyst was separated and washed two times with heptane at 85°C for 20 min.
After that the catalyst was dried with $N_2$ at 85°C for ~1,5h.

Catalyst H:

Into a glass reactor was added 70ml PFC and 0,56ml PFPO as a surfactant, stirring speed was 500 - 700rpm. A complex of Mg-alcoholate, ethylaluminiumdichloride was added to the PFC/PFPO first and immediately after that VCl4/TiCl4-mixture was added and a good emulsion was formed. The emulsion was heated up to 85°C and the reactants were allowed to react for ~1h at 85°C. Then the catalyst was separated and washed two times with heptane at 85°C for 20 min.
Catalyst composition was: 2.8wt% of Al, 11,4wt% of Mg, 1,0wt% of Ti , 3.9wt% of V and 35,9wt% of Cl.

Catalyst I:

Into a glass reactor was added 70ml PFC and 0,44ml PFPO as a surfactant, stirring speed was 500 - 700rpm. A complex of Mg-alcoholate, ethylaluminiumdichloride and VCl4 / TiCl4 was prepared in a separate vessel and added to the PFC/PFPO and an emulsion was formed. The emulsion was heated up to 85°C and the reactants were allowed to react for ~1h at 85°C. Then the catalyst was separated and washed two times with heptane at 85°C for 20 min
Catalyst composition was: 2.0wt% of Al, 7.2wt% of Mg, 4.0wt% of Ti and 1,6wt% of V.

**Ethene-hexene co-polymerisation**

Hexene ($C_6$") was used as co-momomer in the co-polymerization.

A 3 l autoclave reactor was used. 1800 ml (987 g, 17,0 mol) of iso-butane was introduced into the reactor as reaction medium. After adding the polymerisation medium the temperature of the reactor system was set to 85 °C. The catalyst and the co-catalyst were fed into the reactor by means of two feed vessels that were connected in line to the reactor lid. About 50-100 mg of the catalyst was added into the upper feed vessel together with 10 ml (6.3 g, 87 mmol) of pentane. 1ml of 20 w-% heptane solution of tri-iso-butyl-aluminum (TIBA) was used as co-catalyst. The cocatalyst was first let into the reactor and the catalyst was after that introduced by pressurising the upper feed vessel to 30 bar with $N_2$ and there after letting the over pressure push in the catalyst in to the reactor. This manoeuvre was done three times. Two additional feed vessels were connected in series between the lid of the reactor and the ethene monomer feed line. 150 ml of hexene co-monomer was introduced into the lower feed vessel. No $H_2$ was added. The polymerisation was started by opening the monomer feed line and thereby introducing both the comonomer and the ethene monomer. Partial pressure of added ethene was 6,7 bar. A pressure of about 22.5 bar was maintained by the ethene feed trough out the test polymerisation. The co-polymerisation was carried out at 85 °C. The co-polymerisation was continued until 200 g of co-polymer was produced. The polymerisation was stopped by venting off the monomer and the iso-butane.
Low Al/Ti or AIN was used, i.e. a ratio of ~ 2 - 15. Normally ZN-catalyst activity is low when using so low Al/Ti-ratios and TIBA as co-catalyst; (see E1 and E2.)
The polymers were characterized by GPC and DSC and in addition by XS %, density and $C_6$" %. (see table 1)
The catalysts were prepared as stated above. They are listed in Table 1 together with their chemical composition and the polymerization results.

Table 1.

The catalysts, their chemical composition and the polymerization results. 150 ml hexane added but no hydrogen.

| **Catalyst-Example** V/Ti (w-%/w-%) in the feed | **A** 100/0 | **B** 75/25 | **C** 50/50 | **D** 25/75 | **G** Emulsion 25/75 | **H** Emulsion 75/25 | **I** Emulsion 50/50 | **E1** (Comparative) 0/100 | **E1** (Comparative) 0/100 |
|---|---|---|---|---|---|---|---|---|---|
| Al, w-% | 2,5 | 3,7 | 3,0 | 3,5 | 2.2 | 2,8 | 2,0 | 2,3 | 2,3 |
| Mg, w-% | 9,5 | 8,9 | 7,5 | 11,7 | 8.2 | 11,4 | 7,2 | 11,2 | 11,2 |
| Ti, w-% | 0 | 2,1 | 3,8 | 6,8 | 5.2 | 1,0 | 4,0 | 7,2 | 7,2 |
| V, w-% | 11,0 | 9,4 | 5,0 | 4,8 | 4,6 | 3,9 | 1,6 | 0 | 0 |
| Cl, w-% | n.d. | 46,9 | n.d. | 72,1 | n.d. | 35,9 | n.d | 49,8 | 49,8 |
| **Polymerization example** | **1** | **2** | **3** | **4** | **7** | **7a** | **7b** | **5** | **6** |
| Activity | | | | | | | | (Comparative) | (Comparative) |
| kg PO/g cat, h | 7,1 | 11,0 | 35,4 | 63,6 | 12,4 | 1,5 | 4 | 20,8 | 57,7 |
| hexene, w-% | 10,7 | 6,2 | 12,2 | 11,3 | 9 | 3,1 | 1,7 | 1.7 | 7.4 |
| GPC, Mw | 897 000 | 676 000 | 470000 | 478000 | 391 000 | 1 194 000 | 503 000 | 824 000 | 599 000 |
| GPC, Mn | 249 200 | 142 000 | 115 000 | 82 800 | 72 300 | 410 000 | 181 800 | 161 000 | 105 300 |
| MWD | 3,8 | 4,8 | 4,1 | 5,3 | 5,4 | 2,9 | 2,8 | 5,1 | 5.7 |
| Density ($kg/m^3$) | 900,9 | 911,6 | 904,2 | 904,9 | 910,5 | 912,9 | 920,8 | 923.5 | 910.8 |
| XS % | 3 | 1 | 4,7 | 6,7 | 4,3 | 0,1 | 0,2 | 0,2 | 2.7 |
| DSC, $T_m$ | 118,05 | 121,2 | 118,7 | 119,1 | 120,5 | 121,7 | 122,3 | 125,1 | 120.4 |
| DSC, $X_c$ | 27,67 | 37,7 | 32,8 | 31,1 | 37,4 | 36,8 | 43,7 | 49,1 | 33 |
| E1: Al/Ti= 12, E2: Al/Ti=26 | | | | | | | | | |

Ad Activity

All the catalysts showed very aggressive starting behavior. The results in Table 1 showed that the activity for the pure vanadium catalyst was around 7 kg/g cat. When V was partially replaced by Ti, activity becomes better for most of the catalysts of the invention in the polymerization conditions of the examples.
In addition it could be seen that the activity was maintained on a good level during the whole polymerization time, i.e. only a small deactivation could be noticed.

Ad Hexene incorporation

The pure V-ZN catalyst showed a good incorporation of hexane of 10,7 w-%.This was also the case for the catalysts having a V/Ti ratio of 50/50 and 25/75.

Ad) Mw and Mn

Because no hydrogen was added to the polymerization, molecular weight was high. In the case of the pure V catalyst, close to 900 000 g/mol was reached. In the hybrid catalysts with a V/Ti ratio of 50/50 and 25/75, Mw was about half of what was seen in the pure V catalyst, except for catalyst H, where the molecular weight was even higher.

Ad MWD and modality with V/Ti hybrid catalyst

The pure V catalyst (Example A) showed a narrow MWD of 3,8. Contrary to this, the hybrid catalysts having a V/Ti ratio of 50/50 (Example C) and 25/75 (Example D) showed clear bimodal MWD even if their MWD was not higher than 4 - 5. Further it could be seen that emulsion catalysts H and I produced a very narrow MWD without any clear bimodality. Thus, by using the catalysts of the invention, controlling of e.g. MWD and modality is possible by selecting e.g. the amount of V in the catalyst.

Ad Density and XS %

Density was in general low due to both the high hexane content, and to the high Mw. A density of 901 $kg/m^3$ was achieved with the pure V catalyst, while the hybrid catalysts gave densities between around 904 $kg/m^3$ and around 920 $kg/m^3$. XS % was surprisingly low despite the low density.

Ad Melting point, $T_m$

Melting point showed to be slightly below respectively slightly above the critical value of 120°C for the hybrid catalysts, indicating the catalysts describe typical ZN behavior.

Ad deactivation

The hybrid catalysts, having a V/Ti ratio of 50/50 (Example C) and 25/75 (Example D) showed no deactivation during the test-polymerization. After the first run away, in the beginning of the polymerization, the whole system calmed down, and after 2 min the catalyst started to increase its activity. This increasing trend continued trough out the whole polymerization. The pure V catalyst (Example A) showed, after the starting run away, an almost steady state polymerization behavior. The same type behaviour was also seen with emulsion catalysts.

**Co-polymerization with the use of $H_2$:**

The above described co-polymerisation of ethane and hexene was repeated, now with the use of $H_2$.
For this for example 0.5 bar of $H_2$ pressure was added via a upper 500 ml feed vessel (11,2 mmol).
In Table 2 the results with the 100% V/$MgCl_2$ catalyst (catalyst A) when using no $H_2$ respectively 0.5 bar $H_2$ in the polymerization are shown.

Table 2.

| The polymerization results when using no hydrogen, and when using 0,5 bar of hydrogen in the hexene co-polymerization when using the 100% V/$MgCl_2$ catalyst (Example A). | | |
|---|---|---|
| Amount $H_2$ in 500 ml feed cylinder | No | 0,5 bar (11,2 mmol) |
| **Polymerization-example** | **Example 1** | **Example 8** |
| Activity | | |
| kg PO/g cat, h | 7,1 | 6,2 |
| hexane, w-% | 10,7 | 7,1 |
| GPC, Mw, (g/mol) | 897 000 | 204 000 |
| GPC, Mn, (g/mol) | 249 200 | 8740 |
| MWD | 3,8 | 23,4 |
| Density (kg/$m^3$) | 900,9 | 926,2 |
| XS % | 3 | 7,1 |
| DSC, $T_m$ | 118,05 | 124,4 |
| DSC, $X_c$ | 27,67 | 37,2 |

According to literature there is normally a fast drop in activity for a V-based catalyst even if only minute amounts of $H_2$ are added to the polymerization. The results in this study showed that there was only a minor decrease in activity when 0,5 bar of $H_2$ had been added to the polymerization, i.e. from 7,1 to 6,2 kg PO/g cat, h. At the same time Mw is decreasing from about 900 000 g/mol to 200 000 g/mol. MWD become very broad, going up from 3,8 to 23,4. The material turned out to be bimodal.

Decrease in Mw together with lower $C_6$" % influenced much on the density, i.e. an increase fro 900,9 to 926,2 kg/$m^3$ was seen.

In Table 3 the polymerization results are listed when using the 50 %V/50 %Ti catalyst (catalyst C) with different amounts of $H_2$ in the polymerization. The results showed that there was no real activity decrease due to the addition of hydrogen. If no hydrogen was used, then an activity of 35,8 kg PO/g cat was achieved, and when 3 bar of $H_2$ had been added, the activity decreased to 32,6 which is a decrease of about 10 %. In between zero and 3 bar of $H_2$, a little bit higher activity decrease was seen.

The results in Table 3 showed that there was a clear change in the hexane incorporation caused by the added amount of $H_2$ in the polymerization. The small addition of 0,5 bar gave an increase of incorporated hexane (15,3 %), higher amounts gave a decrease in hexane incorporation (9,3 % and 6,4 %).

Mw decreased from 470 000 g/mol to around 150 000 g/mol, here the greatest change was when adding the first 0,5 bar of $H_2$. MWD was also broad in this polymer (7,7). The clear Bimodal MWD that was seen in the polymer where no hydrogen had been used in the polymerization (Example 3) was not any longer seen in the polymers where hydrogen had been added, even after the first addition of 0,5 bar of $H_2$, where MWD increased to 7,7. The more hydrogen that was added after that, the more narrow the MWD become.

A low density of 901,5 kg/$m^3$ was achieved when 0,5 bar of $H_2$ was added, but this on the expense of a very high XS % of 27,3 %. The DSC $T_m$ values indicated that a strong fraction of HDPE was present in all the polymers.

Table 3.

| Polymerization of the 50 %V/50 %Ti catalyst (Example C) with an increasing amount of $H_2$ in the polymerization. | | | | |
|---|---|---|---|---|
| Amount $H_2$ in 500 ml feed cylinder | No | 0,5 bar | 1,0 bar | 3,0 bar |
| Polymerization example | Example 3 | Example 9 | Example 10 | Example 11 |
| Activity | | | | |
| kg PO/g cat, h | 35,4 | 24,6 | 28,6 | 32,6 |
| hexane, w-% | 12,2 | 15,3 | 9,3 | 6,4 |
| GPC, Mw, (g/mol) | 470000 | 156 000 | 178 000 | 124 000 |
| GPC, Mn, (g/mol) | 115 000 | 20 400 | 35 900 | 25 900 |
| MWD | 4,1 | 7,7 | 5 | 4,8 |
| Density (kg/$m^3$) | 904,2 | 901,5 | 916,3 | 926,2 |

(continued)

| Polymerization of the 50 %V/50 %Ti catalyst (Example C) with an increasing amount of $H_2$ in the polymerization. | | | | |
|---|---|---|---|---|
| Amount $H_2$ in 500 ml feed cylinder | No | 0,5 bar | 1,0 bar | 3,0 bar |
| Polymerization example | Example 3 | Example 9 | Example 10 | Example 11 |
| Activity | | | | |
| XS % | 4,7 | 27,3 | 8,5 | 6 |
| DSC, $T_m$ | 118,7 | 122,2 | 122,2 | 125 |
| DSC, $X_c$ | 32,8 | 24,8 | 36,9 | 45,6 |

In Table 4 the results are compared when using a 100 % V catalyst (Example A) and 50 % V/50 % Ti catalyst (Example C) and when adding 0,5 bar $H_2$ to the polymerization. The results showed that there was a clear increase in activity, in comonomer response and in hydrogen response when 50 % of the V was replaced with Ti. MWD becomes more narrow, i.e. a decrease from 23,4 to 7,7 and there is no bimodal MWD when going from 100 % V to a 50/50 V-Ti catalyst.

Table 4:

| The results achieved when using a 100 % V catalyst (Example A) and 50 % V/50 % Ti catalyst (Example C) and when adding 0,5 bar $H_2$ to the polymerization. | | |
|---|---|---|
| V/Ti (%/%) | 100 % V | 50/50 |
| Polymerization example | Example 8 | Example 9 |
| Activity | | |
| kg PO/g cat, h | 6,2 | 24,6 |
| hexane, w-% | 7,1 | 15,3 |
| GPC, Mw, (g/mol) | 204 000 | 156 000 |
| GPC, Mn, (g/mol) | 8740 | 20 400 |
| MWD | 23,4 | 7,7 |
| Density (kg/m$^3$) | 926,2 | 901,5 |
| XS % | 7,1 | 27,3 |
| DSC, $T_m$ | 124,4 | 122,2 |
| DSC, $X_c$ | 37,2 | 24,8 |

**Co-polymerization between ethene and butene**

To see the difference between butene and hexene incorporation, an additional polymerization was carried out, where the 150 ml of hexene was replaced with 150 ml of butene. The results are listed in Table 5. The results showed that activity did not change to any significant extent. The same was the situation with the incorporation of the co-monomer on a w-% basis, on mol-% basis 30 % more of butene was incorporated which reflects the normal higher reactivity of an $\alpha$-olefin with a shorter chain. This higher incorporation of butene shows up as lower Mw, lower density, lower $T_m$ and lower $X_c$ and higher XS %.
In the butene co-polymer (Example 12) MWD showed to be broader compared to the MWD in the hexane-co-polymer (Example 10) (see table 5)

Table 5.

| The results achieved when using the 50 % V/50 % Ti catalyst (Example C) and when replacing the feed of co-monomer from 150 ml of hexane to 150 ml of butene. Amount hydrogen was 1 bar. | | |
|---|---|---|
| Co-monomer (150 ml) | Hexene | Butene |
| Polymerization example | Example 10 | Example 12 |
| Activity | | |
| kg PO/g cat, h | 28,6 | 24,6 |
| $C_6$" or $C_4$", w-% | 9,3 | 9,5 |

(continued)

| The results achieved when using the 50 % V/50 % Ti catalyst (Example C) and when replacing the feed of co-monomer from 150 ml of hexane to 150 ml of butene. Amount hydrogen was 1 bar. | | |
|---|---|---|
| Co-monomer (150 ml) | Hexene | Butene |
| Polymerization example | Example 10 | Example 12 |
| Activity | | |
| GPC, Mw, (g/mol) | 178 000 | 119 000 |
| GPC, Mn, (g/mol) | 35 900 | 16 900 |
| MWD | 5 | 7,1 |
| Density ($kg/m^3$) | 916,3 | 910,2 |
| XS % | 8,5 | 18,4 |
| DSC, $T_m$ | 122,2 | 119,4 |
| DSC, $X_c$ | 36,9 | 29,2 |

**Ter-polymers using butene and hexene as co-monomers**

Two tests were made with the V-catalysts in ter-polymerization conditions, using both butene and hexene as co-monomer. The results are listed in Table 6.
The ter-polymer of the pure V catalyst (Example A), with 0,5 bar of $H_2$, should be compared to the corresponding hexene-polymer (Example 8).

Table 6.

| Results from ter-polymerization conditions with the V-catalysts. | | |
|---|---|---|
| Catalyst, V%/Ti%<br>Amount of $H_2$ (bar) | 50%/50%<br>3 | 100% V<br>0,5 |
| Polymerization example | Example 13 | Example 14 |
| Activity | | |
| kg PO/g cat, h | 27,6 | 8,2 |
| $C_6$" or $C_4$", w-% | n.d. | n.d. |
| GPC, Mw, (g/mol) | 102 000 | 184 000 |
| GPC, Mn, (g/mol) | 19 300 | 9 960 |
| MWD | 5,3 | 18,5 |
| Density ($kg/m^3$) | 922,1 | 928,6 |
| XS % | 8,4 | 6,3 |
| DSC, $T_m$ | 122,5 | 122,6 |
| DSC, $X_c$ | 45,4 | 47,4 |

## Claims

1. Improved solid Ziegler-Natta catalyst system for the (co)polymerization of ethylene, said catalyst system comprising

   1) a solid procatalyst formed by contacting at least:

      a) a Mg-alcoholate complex of the formula (I):
      $Mg(OR_1)_{2-n}(R_1)_nX_m$, wherein each $R_1$ independently represents a $C_1$-$C_{20}$ hydrocarbyl group; each X is independently a halogen; $0 \leq n < 2$ and may or may not be an integer; $m < 2$ and may or may not be an integer; the sum of (2-n), n and m is 2
      b) an aluminium compound of the formula (II)
      $Al(R_1)_mX_{3-m}$, wherein each $R_1$ independently represents an alkyl of up to 6 carbon atoms; each X is independently a halogen; $0 \leq m < 3$ and m and may or may not be an integer
      c) a vanadium compound and optionally a titanium compound in portions such as to provide a molar ratio

of V:Ti from 100:0 to 5:95 and
d) optionally one or more organic ligand compound(s) which is/are selected from organic compounds comprising a cyclopentadienyl anion backbone,

in order to yield the solid procatalyst and
2) one or more organometallic cocatalyst(s) of the formula (III)

$$\begin{array}{c}(RO)_z \\ | \\ R_y\text{-}Al\text{-}Cl_x\end{array}$$

wherein each R is independently a $C_1$-$C_{20}$-alkyl group, $0 \leq x \leq 2$; $1 \leq y \leq 3$; $0 \leq z \leq 2$ and $x + y + z = 3$, x, y and z may or may not be an integer.

**2.** Improved solid Ziegler-Natta catalyst system according to claim 1, wherein the solid procatalyst is prepared by contacting at least

[A] a solid magnesium aluminum complex containing magnesium, halogen and aluminum, said complex being obtained by

(a1) adding a solution of a magnesium compound of the formula (I):
$Mg(OR_1)_{2-n}(R_1)_nX_m$, wherein each $R_1$ independently represents a $C_1$-$C_{20}$ hydrocarbyl group; each X is independently a halogen; $0 \leq n < 2$ and may or may not be an integer; $m < 2$ and may or may not be an integer; the sum of (2-n), n and m is 2;
to a solution of a compound of formula (II): $Al(R_1)_mX_{3-m}$, wherein each $R_1$ independently represents an alkyl of up to 6 carbon atoms; each X is independently a halogen, $0 \leq m < 3$ and m may or may not be an integer,
(a2) separating the solidified reaction product from the reaction mixture and washing the product with a wash solution until a molar ratio of aluminum to magnesium has a value of at least 0.3

[B] with a vanadium compound and optionally a titanium compound in portions such as to provide a molar ratio of V:Ti from 100:0 to 5:95 in order to yield the procatalyst and
[C] optionally adding one or more ligand compound(s) d) which is/are selected from organic compounds comprising a cyclopentadienyl anion backbone at any stage of the preparation.

**3.** Improved solid Ziegler-Natta catalyst system according to claim 1, wherein the solid procatalyst is prepared by

[A] preparing a common solution of a), b) and c) or separate solutions comprising one or more of compounds a), b) and c)
[B] dispersing said solution(s) in a solvent immiscible therewith and inert in relation to said compounds, to obtain an emulsion in which said solution(s) form(s) the dispersed phase in the form of droplets comprising compounds (a), (b) and (c),
[C] solidifying the catalyst compounds in the dispersed droplets and
[D] optionally adding one or more ligand compound(s) d) which is/are selected from organic compounds comprising a cyclopentadienyl anion backbone at any stage of the preparation into the dispersed phase before or after the solidification step.

**4.** Improved solid Ziegler-Natta catalyst system according to any one of claims 1 to 3, wherein a magnesium hydrocarbyloxy compound of the formula (I) $Mg(OR_1)_{2-n}(R_1)_nX_m$ is used, wherein $0 \leq n < 2$ and may or may not be an integer, m is 0 and each $R_1$ are independently as defined in claim 1.

**5.** Improved solid Ziegler-Natta catalyst system according to any one of claims 1 to 4, wherein the magnesium hydrocarbyloxide of the formula (I) is a reaction mixture prepared by contacting in an inert hydrocarbon solvent or any mixtures thereof a magnesium alkyl of formula $Mg(R_1)_2$ (IV), wherein each $R_1$ is independently as defined in claim 1, with an alcohol of formula $R_1OH$, wherein $R_1$ is as defined in claim 1.

6. Improved solid Ziegler-Natta catalyst system according to claim 5, wherein the magnesium alkyl of formula (IV) is butyloctylmagnesium.

7. Improved solid Ziegler-Natta catalyst system according to claim 5, wherein the alcohol $R_1OH$ is 2-ethyl-1-hexanol.

8. Improved solid Ziegler-Natta catalyst system according to any one of claims 1 to 7, wherein the compound of formula (II) is a dialkyl aluminum chloride selected from dimethyl aluminum chloride, diethyl aluminum chloride, diisobutyl aluminum chloride or an alkyl aluminum dichloride selected from ethyl aluminum dichloride or methyl aluminum dichloride.

9. Improved solid Ziegler-Natta catalyst system according to any one of claims 1 to 8, wherein the molar ratio is adjusted to $0.4 \leq Al:Mg \leq 1.1$, and preferably to $0.6 \leq Al:Mg \leq 0.99$.

10. Improved solid Ziegler-Natta catalyst system according to any one of claims 1 to 9, wherein the vanadium compound used has the general formula $V(OR)_{4-m}X_m$ or $VO(OR)_{3-n}X_n$ in which formulae R denotes an alkyl group containing from 1 to 12 carbon atoms, X a halogen atom, m an integral or fractional number ranging from 0 to 4 and n an integral of fractional number ranging from 0 to 3.

11. Improved solid Ziegler-Natta catalyst system according to claim 10, wherein the vanadium compound is selected from vanadium tetrachloride, vanadyl trichloride, vanadyl tri-n-propoxide, vanadyl triisopropoxide and vanadium tetra-n-propoxid.

12. Improved supported Ziegler-Natta catalyst system according to any one of claims 1 to 11, wherein the titanium compound used has the general formula $Ti(OR)_{4-p}X_p$ in which formula R denotes an alkyl group containing from 1 to 12 carbon atoms, X a halogen atom, and p an integral or fractional number ranging from 0 to 4.

13. Improved solid Ziegler-Natta catalyst system according to claims 12, wherein the titanium compound is selected from titanium tetrachloride or titanium tetraisopropoxide.

14. Improved solid Ziegler-Natta catalyst system according to any one of claims 1 to 13, wherein in the solid procatalyst the molar ratio of Mg:(V/Ti) is between 10:1 to 1:10, preferably less than 6:1, such as between less than 6:1 and 1:1.

15. Improved solid Ziegler-Natta catalyst system according to any one of claims 1 to 14, wherein in the solid procatalyst the molar ratio of (V/Ti):Al is between 10:1 to 1:2, preferably 5:1 to 1:1.

16. Improved solid Ziegler-Natta catalyst system according to any one of claims 1 to 15, wherein in the solid procatalyst the molar ratio of V:Ti is from 100:0 to 10:90, preferably to 15:85 and more preferably to 20:80.

17. Improved solid Ziegler-Natta catalyst system according to any one of claims 1 to 16, wherein the cyclopentadienyl anion of the organic ligand compound d) is selected from a substituted or unsubstituted cyclopentadienyl, a substituted or unsubstituted indenyl or a substituted or unsubstituted fluorenyl compound.

18. Improved solid Ziegler-Natta catalyst system according to any one of claims 1 to 17, wherein the cocatalyst of the formula (III) is selected from the group of aluminium alkyls, with x and z = 0; y = 3; aluminium alkyl halides, with $z = 0$; $0 < x \leq 2$; $1 \leq y < 3$ and aluminium alkoxy compounds with $0 < z \leq 2$, $x = 0$; $1 \leq y < 3$ or mixtures thereof.

19. Improved solid Ziegler-Natta catalyst system according to any one of claims 1 to 18, wherein the cocatalyst is selected from trimethyl aluminum, triethyl aluminum, tri-isobutylaluminium, tri-n-octyl aluminium and isoprenyl aluminium or mixtures thereof.

20. Improved solid Ziegler-Natta catalyst system according to any one of claims 1 to 19, wherein the molar ratio between the aluminium in the cocatalyst and the V/Ti of the procatalyst is preferably 1:1 - 100:1, more preferably 2:1 - 50:1 and most preferably 3:1 - 20:1.

21. Use of a catalyst system according to any one of claims 1 to 20 for the polymerisation of polyethylene and any co- or terpolymer thereof.

22. Use according to claim 21, wherein the olefin to be polymerised can be ethylene alone or a mixture with one or more

comonomeres selected from 1-butene, isobutene, 1-pentene, 1-hexene, 4-methyl-1-pentene, 1-heptene, 1-octene, 1-nonene, 1-decene, butadiene, 1,7-octadiene, 1,4-hexadiene and norbornene.

**23.** A process for producing linear low density polyethylene having a density between 900 and 935 $kg/m^3$, which process comprises:

- introducing a procatalyst according to any one of claims 1 to 22 into the polymerisation reactor
- introducing the cocatalyst of the catalyst system according to any one of claims 1 to 22 into the polymerisation reactor
- introducing ethylene, one or more alpha-olefin comonomer having 3 to 20 carbon atoms and optionally hydrogen into the polymerisation reactor
- maintaining said polymerisation reactor in such conditions as to produce an ethylene copolymer having a density between 900 and 935 $kg/m^3$, and
- recovering said ethylene copolymer

**24.** A process according to claim 23, wherein the resulting ethylene copolymer compositions has a molecular weight of from 10 000 to 1 200 000 g/mol and a comonomer content of from 1 to 16 w-%.

European Patent Office

# EUROPEAN SEARCH REPORT

Application Number
EP 07 11 5411

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 0 280 352 A (STAMICARBON [NL])<br>31 August 1988 (1988-08-31)<br>* examples 18,19; table 5 *<br>----- | 1-24<br>2,3 | INV.<br>C08F4/68<br>C08F4/685<br>C08F210/16 |
| X | US 4 657 997 A (BEST STEVEN A [US])<br>14 April 1987 (1987-04-14)<br>* examples 7,9 *<br>* claims 1,2,8,9 *<br>----- | 1-24 | |
| X | US 5 922 632 A (ZUCCHINI UMBERTO [IT] ET AL) 13 July 1999 (1999-07-13)<br>* example 46 *<br>----- | 1-21 | |
| D,Y | WO 2004/055069 A (BOREALIS TECH OY [FI]; GAROFF THOMAS [FI]; WALDVOGEL PAEIVI [FI]; PESO) 1 July 2004 (2004-07-01)<br>* the whole document *<br>----- | 2 | |
| Y | EP 1 375 528 A (BOREALIS POLYMERS OY [FI])<br>2 January 2004 (2004-01-02)<br>* the whole document * | 3 | TECHNICAL FIELDS SEARCHED (IPC) |
| D,Y | & WO 03/106510 A (BOREALIS POLYMERS OY [FI]; GAROFF THOMAS [FI]; PERSONEN KARI [FI]; WAL) 24 December 2003 (2003-12-24)<br>----- | 3 | C08F |

The present search report has been drawn up for all claims

| Place of search | Date of completion of the search | Examiner |
|---|---|---|
| The Hague | 11 January 2008 | Fischer, Brigitte |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

4

EPO FORM 1503 03.82 (P04C01)

## ANNEX TO THE EUROPEAN SEARCH REPORT ON EUROPEAN PATENT APPLICATION NO. EP 07 11 5411

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2008

| Patent document cited in search report | Publication date | Patent family member(s) | Publication date |
|---|---|---|---|
| EP 0280352 A | 31-08-1988 | BR 8800567 A | 27-09-1988 |
| | | CA 1312326 C | 05-01-1993 |
| | | CN 88100569 A | 05-10-1988 |
| | | DE 3867653 D1 | 27-02-1992 |
| | | ES 2038738 T3 | 01-08-1993 |
| | | IN 170685 A1 | 02-05-1992 |
| | | JP 63304007 A | 12-12-1988 |
| | | NL 8700321 A | 01-09-1988 |
| | | US 5013701 A | 07-05-1991 |
| US 4657997 A | 14-04-1987 | NONE | |
| US 5922632 A | 13-07-1999 | NONE | |
| WO 2004055069 A | 01-07-2004 | AU 2002368470 A1 | 09-07-2004 |
| | | AU 2003266419 A1 | 09-07-2004 |
| | | CN 1708518 A | 14-12-2005 |
| | | WO 2004055068 A1 | 01-07-2004 |
| | | EP 1572760 A1 | 14-09-2005 |
| | | US 2006154805 A1 | 13-07-2006 |
| EP 1375528 A | 02-01-2004 | AU 2002361157 A1 | 31-12-2003 |
| | | AU 2003245977 A1 | 31-12-2003 |
| | | BR 0215743 A | 22-03-2005 |
| | | CN 1628133 A | 15-06-2005 |
| | | WO 03106510 A1 | 24-12-2003 |
| | | WO 03106508 A1 | 24-12-2003 |
| | | JP 2005529997 T | 06-10-2005 |
| | | US 2006111523 A1 | 25-05-2006 |
| | | US 2007249489 A1 | 25-10-2007 |
| | | ZA 200410187 A | 06-09-2005 |
| WO 03106510 A | 24-12-2003 | AU 2002361157 A1 | 31-12-2003 |
| | | AU 2003245977 A1 | 31-12-2003 |
| | | BR 0215743 A | 22-03-2005 |
| | | CN 1628133 A | 15-06-2005 |
| | | WO 03106508 A1 | 24-12-2003 |
| | | EP 1375528 A1 | 02-01-2004 |
| | | JP 2005529997 T | 06-10-2005 |
| | | US 2006111523 A1 | 25-05-2006 |
| | | US 2007249489 A1 | 25-10-2007 |
| | | ZA 200410187 A | 06-09-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4508842 A
- JP 62025112 A
- EP 0435345 A
- EP 0057050 A
- EP 0969021 A
- US 6214759 B
- WO 2004055068 A
- WO 03106510 A
- WO 0155230 A


### Non-patent literature cited in the description


- *Macromol. Rapid Commun.,* 1996, vol. 17, 253-260
- **A. ENDERS ; G. MAAS.** *Chemie in unserer Zeit,* 2000, vol. 34 (6
- **PIERANDREA LO NOSTRO.** Advances in Colloid and Interface Science. Elsevier Science, 1995, vol. 56, 245-287